(19) Europäisches Patentamt / European Patent Office / Office européen des brevets

(11) **EP 2 847 500 B1**

(12) **EUROPÄISCHE PATENTSCHRIFT**

(45) Veröffentlichungstag und Bekanntmachung des Hinweises auf die Patenterteilung:
**06.03.2019   Patentblatt 2019/10**

(51) Int Cl.:
*F16K 31/06* *(2006.01)*       *F16K 31/56* *(2006.01)*

(21) Anmeldenummer: **13711628.1**

(22) Anmeldetag: **19.03.2013**

(86) Internationale Anmeldenummer:
**PCT/EP2013/055629**

(87) Internationale Veröffentlichungsnummer:
**WO 2013/167305 (14.11.2013 Gazette 2013/46)**

(54) **MAGNETVENTIL**

SOLENOID VALVE

ÉLECTROVANNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2012   DE 102012207584**

(43) Veröffentlichungstag der Anmeldung:
**18.03.2015   Patentblatt 2015/12**

(73) Patentinhaber: **Robert Bosch GmbH**
**70442 Stuttgart (DE)**

(72) Erfinder: **HERRMANN, Ralf**
**77880 Sasbach (DE)**

(56) Entgegenhaltungen:
**EP-A1- 1 538 379      WO-A1-2008/056101**
**DE-A1- 4 438 250      DE-A1- 19 754 257**

EP 2 847 500 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Magnetventil, welches eine elektromagnetisch betätigte Ventilstange aufweist. Die Ventilstange kann ausgehend von einer ersten Schaltposition in eine zweite Schaltposition ausgelenkt werden.

Stand der Technik

Elektrisch ansteuerbare Magnetventile werden zum Beispiel zur Ab- oder Umschaltung von Kühlmittelkreisen in Kühlsystemen von Kraftfahrzeugen eingesetzt. Derartige Ventile können in ihren jeweiligen Endlagen (d.h. stromlos oder bestromt) stabile Schaltpositionen einnehmen, wodurch "digitale" Schaltvorgänge realisiert werden können. Bekannte Magnetventile weisen eine auslenkbare Ventilstange auf, an welcher ein ferromagnetischer Anker und (wenigstens) ein Schließelement in Form eines Dichtkegels angeordnet sind. Durch Bestromen einer Erregerspule können der Anker und ein dazugehöriger ferromagnetischer Gegenpol magnetisiert werden, wodurch eine Anziehungskraft zwischen diesen Komponenten, und dadurch eine Auslenkung der Ventilstange ausgehend von einer ersten Schaltposition in eine zweite Schaltposition hervorrufbar ist. Das an der Ventilstange angeordnete Schließelement kann hierdurch in einen Ventilsitz hinein bewegt, oder von diesem entfernt werden. Mit Hilfe einer Rückstellfeder und/oder infolge des hydraulischen Drucks eines Kühlmittels kann die Ventilstange bei einem Abschalten der Bestromung wieder in die erste Schaltposition zurückkehren. Nach diesem Prinzip arbeitende Ventile, welche als stromlos geöffnetes Abschaltventil oder als Umschaltventil vorliegen, sind in DE 197 54 257 A1, EP 0 653 990 B1 und DE 197 53 575 A1 beschrieben.

Ein Nachteil herkömmlicher Magnetventile ist eine relativ hohe dauerhafte Stromaufnahme in der bestromten Schaltposition. Die Verwendung eines Abschaltventils in einem Fahrzeug-Kühlsystem kann zum Beispiel eine Schließkraft im Bereich von 20N erfordern, um das Ventil gegen die Kraft der Rückstellfeder und gegen den hydraulischen Druck geschlossen zu halten. Dies kann, bei einer Bordnetzspannung von 12V, mit einer dauerhaften Stromaufnahme im Bereich von 1A verbunden sein. Da im geschlossenen Ventilzustand keine mechanische Arbeit verrichtet wird, wird die elektrische Leistung in der Erregerspule des Ventils vollständig in Wärme umgesetzt. Diese Verlustleistung erschwert den Einsatz in modernen, effizienzoptimierten Fahrzeugen. Auch ist die Dimensionierung der Spule im Wesentlichen durch diese thermische Randbedingung bestimmt.

Demgegenüber weisen Magnetventile den Vorteil eines sicheren Verhaltens im Fehlerfall auf (Fail-Safe-Funktion), da die Ventile bei einem Verlust der elektrischen Leistungszufuhr (beispielsweise infolge von Kontaktunterbrechung, Spannungsabfall, Kabelbruch, Steckertrennung, usw.) selbständig in eine stabile, sichere Schaltposition (beispielsweise offen) schalten. Bei anders aufgebauten Ventilen, bei welchen keine elektrische Leistungsaufnahme in stabilen Schaltpositionen vorliegt, kann diese Funktion bislang nicht, oder nur mit Hilfe von Zusatzmechanismen (wiederum verbunden mit einer hohen Dauerstromaufnahme) verwirklicht werden. Trotz der hohen elektrischen Verlustleistung finden Magnetventile daher weiterhin große Verbreitung in Fahrzeug-Kühlsystemen.

Offenbarung der Erfindung

Die Aufgabe der Erfindung besteht darin, ein verbessertes Magnetventil anzugeben, bei dem eine hohe dauerhafte Stromaufnahme in einer Schaltposition vermieden werden kann, bei voller Bereitstellung einer Fail-Safe-Funktion.
Diese Aufgabe wird durch die Merkmale des unabhängigen Patentanspruchs gelöst. Weitere vorteilhafte Ausführungsformen der Erfindung sind in den abhängigen Ansprüchen angegeben.
Erfindungsgemäß wird ein Magnetventil vorgeschlagen, welches eine Ventilstange, eine elektromagnetische Betätigungseinrichtung zum Auslenken der Ventilstange ausgehend von einer ersten Schaltposition in eine zweite Schaltposition, und eine Stützeinrichtung zum Abstützen der Ventilstange aufweist. Die Stützeinrichtung weist abhängig von der Auslenkung der Ventilstange eine unterschiedliche Form auf. Das Magnetventil umfasst des Weiteren eine Arretiereinrichtung, welche ausgebildet ist, bei einem Aktivieren der elektromagnetischen Betätigungseinrichtung zum Auslenken der Ventilstange in die zweite Schaltposition ein bewegbares Halteelement in eine Arretierposition zu bewegen, in welcher das Halteelement an der Stützeinrichtung anliegt, und bei einem Deaktivieren der elektromagnetischen Betätigungseinrichtung das Halteelement von der Arretierposition zu entfernen.
Bei dem Magnetventil kann durch Aktivieren der elektromagnetischen Betätigungseinrichtung die Ventilstange ausgehend von der ersten in die zweite Schaltposition ausgelenkt werden. Die Auslenkung der Ventilstange, welche gegen eine Rückstellkraft (beispielsweise hervorgerufen durch eine Rückstellfeder und/oder infolge eines hydraulischen Drucks) erfolgen kann, ist mit einer Änderung der Form der Stützeinrichtung verbunden. Das Aktivieren der elektromagnetischen Betätigungseinrichtung hat des Weiteren zur Folge, dass die Arretiereinrichtung das Halteelement in die Arretierposition bewegt, so dass das Halteelement an der Stützeinrichtung anliegt. Hierdurch kann das Halteelement einer (entgegen gesetzten) Änderung der Form der Stützeinrichtung entgegenwirken, und dadurch der Stützeinrichtung eine vergrößerte Stabilität bzw. Festigkeit verleihen. In diesem Zustand kann die an der Stützeinrichtung abgestützte Ventilstange zuverlässig in der zweiten Schaltposition gehalten werden. Die auf diese Weise verwirklichte Arretierung der Stützeinrichtung und damit der Ventilstange macht es möglich, eine elektrische Energiezufuhr zu dem Magnetventil, welche zum Aktivieren der Betätigungseinrichtung und damit zum Auslenken der Ventilstange aufgewendet wird, nach Erreichen der zweiten Schaltposition weitgehend zu reduzieren. Eine relativ kleine (bzw. minimale) elektrische Energiezufuhr kann dafür sorgen, dass das Halteelement in der Arretierposition verbleibt.

Das Magnetventil weist ferner ein sicheres Verhalten im Fehlerfall auf. Sofern die zum Halten des Halteelements in der Arretierposition aufgewendete reduzierte elektrische Energiezufuhr wegfällt (oder unterschritten wird) bzw. die elektromagnetische Betätigungseinrichtung deaktiviert wird, wird das Halteelement von der Arretierposition entfernt. Hierdurch wird die Arretierung der Stützeinrichtung aufgehoben, wodurch die Ventilstange selbständig bzw. infolge der Rückstellkraft wieder in die erste Schaltposition zurückkehren kann.

In einer bevorzugten Ausführungsform ist die Stützeinrichtung ausgebildet, eine auf die Stützeinrichtung einwirkende Haltekraft in eine auf die Ventilstange einwirkende Stützkraft umzusetzen. Das Verhältnis aus Haltekraft und Stützkraft ist nichtlinear abhängig von der Form der Stützeinrichtung, und damit von der Auslenkung der Ventilstange. Die Arretiereinrichtung ist ausgebildet, die Haltekraft (lediglich) mit dem in die Arretierposition bewegten Halteelement auf die Stützeinrichtung zu übertragen. In diesem Zustand ist die von dem Halteelement auf die Stützeinrichtung übertragene Haltekraft kleiner als die auf die Ventilstange einwirkende Stützkraft. In dieser Ausführungsform wird das nichtlineare Verhalten der Stützeinrichtung dazu genutzt, um die Arretierung der Stützeinrichtung (und damit der Ventilstange) mit einer relativ kleinen Haltekraft zwischen dem Halteelement und der Stützeinrichtung zu verwirklichen. Dabei kann die Haltekraft in eine wesentlich größere Stützkraft zwischen der Stützeinrichtung und der Ventilstange umgesetzt werden. Desgleichen hat eine große Krafteinwirkung von der Ventilstange auf die Stützeinrichtung (= Gegenkraft zur Stützkraft) lediglich eine kleine Krafteinwirkung von der Stützeinrichtung auf das Halteelement (= Gegenkraft zur Haltekraft) zur Folge. Dadurch ist es möglich, das Halteelement auf zuverlässige Weise, insbesondere mit relativ wenig Kraftaufwand, wieder von der Arretierposition zu entfernen.

Die Stützeinrichtung kann insbesondere zwischen der Ventilstange und einem Abschnitt eines Gehäuses des Magnetventils angeordnet sein, so dass sich die Stützeinrichtung an dem Gehäuse abstützen kann. Des Weiteren kann vorgesehen sein, dass sich bei der Auslenkung der Ventilstange von der ersten in die zweite Schaltposition die Längsabmessung der Stützeinrichtung vergrößert und demgegenüber sich die Querabmessung verkleinert. Hierbei kann vorgesehen sein, dass (erst) das Verkleinern der Querabmessung der Stützeinrichtung ein Bewegen des Halteelements in dessen Arretierposition ermöglicht. Das in dieser Position an der Stützeinrichtung anliegende Halteelement kann dazu dienen, einer Querausdehnung, und dadurch einer Verkleinerung der Längsabmessung der Stützeinrichtung entgegenzuwirken.

In einer weiteren bevorzugten Ausführungsform ist die Stützeinrichtung als Kniehebel-Mechanismus ausgebildet. Eine solche Ausgestaltung bietet die Möglichkeit, das oben beschriebene nichtlineare Verhalten von Haltekraft und Stützkraft auf relativ einfache Weise zu verwirklichen.

In dieser Hinsicht ist gemäß einer weiteren bevorzugten Ausführungsform vorgesehen, dass die Stützeinrichtung eine Federhülse umfasst, welche zwei Endabschnitte und die Endabschnitte verbindende Verbindungsstege aufweist. Die Federhülse kann zum Beispiel aus einem metallischen Material, beispielsweise Federstahl, ausgebildet sein. Bei einer solchen, relativ einfachen und kostengünstigen Ausgestaltung eines rückfedernden Kniehebel-Mechanismus kann jeder der Verbindungsstege der Federhülse als Anordnung von zwei Schenkeln eines Kniehebels aufgefasst werden. Entsprechende "Drehpunkte" können an den Endabschnitten, und im Bereich jedes Verbindungsstegs vorliegen. Hierbei kann die Federhülse in der ersten Schaltposition der Ventilstange axial zusammengedrückt, und radial nach außen ausgedehnt sein. Bei einem Auslenken der Ventilstange in die zweite Schaltposition kann die Federhülse selbständig eine im Wesentlichen axial gestreckte, nur wenig nach außen ausgedehnte Form einnehmen, und daher eine gegenüber der ersten Schaltposition kleinere Querabmessung aufweisen. Über das (nur) in diesem Zustand an der Federhülse anliegende Halteelement kann der Federhülse eine hohe Steifigkeit verliehen werden, wodurch ein axiales Zusammendrücken verhindert werden kann. Die Haltekraft des Halteelements kann über die Federhülse in eine relativ große, auf die Ventilstange einwirkende Stützkraft umgesetzt werden.

Anstelle einer Federhülse kann ein Kniehebel-Mechanismus auch auf andere Art und Weise verwirklicht sein. Ein mögliches Beispiel ist eine Stützeinrichtung mit zwei Endabschnitten, wobei an zwei oder mehr Stellen die zwei Endabschnitte über zwei aneinandergrenzende Schenkel verbunden sind. Zwischen den aneinandergrenzenden Schenkeln und jeweils zwischen einem Schenkel und einem Endabschnitt können Drehpunkte, beispielsweise in Form von Filmscharnieren, vorgesehen sein. Um auch bei einer derartigen Stützeinrichtung ein selbständiges axiales Strecken hervorzurufen, kann die Stützeinrichtung ferner mit einem zusätzlichen Federelement zwischen den zwei Endabschnitten ausgebildet sein.

Darüber hinaus sind auch andere Ausführungsformen einer Stützeinrichtung denkbar, bei denen ebenfalls ein nichtlineares Verhalten vorliegt. In dieser Hinsicht ist gemäß einer weiteren bevorzugten Ausführungsform vorgesehen, dass die Stützeinrichtung zwei über ein Scharnier verbundene und gegeneinander bewegbare bzw. drehbare Stützelemente umfasst. Zwischen den Stützelementen ist ein Federelement angeordnet, um die Stützelemente bei einem Auslenken der Ventilstange von der ersten in die zweite Schaltposition derart zu positionieren, dass das Halteelement in die Arretierposition bewegbar ist. Eine solche Stützeinrichtung ist ebenfalls dazu geeignet, um die Haltekraft des Halteelements in eine relativ große und auf die Ventilstange einwirkende Stützkraft umzusetzen.

Dies trifft in entsprechender Weise auf eine weitere bevorzugte Ausführungsform zu, gemäß welcher die Stützeinrichtung zwei Stützelemente aufweist, welche gegeneinander verschiebbar sind. Eines der Stützelemente ist über ein Scharnier mit der Ventilstange verbunden. Das andere der beiden Stützelemente ist über ein Scharnier mit einem an dem Magnetventil vorgesehenen Befestigungsabschnitt verbunden. Darüber hinaus sind Federelemente an den Stützelementen angeordnet, um die Stützelemente bei einem Auslenken der Ventilstange von der ersten in die zweite Schaltposition derart zu positionieren, dass das Halteelement in die Arretierposition bewegbar ist.

Vorzugsweise weist die elektromagnetische Betätigungseinrichtung einen mit der Ventilstange verbundenen Magnetanker, ein Joch und eine Erregerspule auf. Zwischen dem Magnetanker und dem Joch ist eine Rückstellfeder angeordnet. Der Magnetanker und das Joch sind über die Erregerspule magnetisierbar, so dass eine Anziehung zwischen dem Magnetanker und dem Joch gegen die Rückstellkraft der Rückstellfeder, und dadurch die Auslenkung der Ventilstange aus der ersten in die zweite Schaltposition hervorrufbar ist.

In einer weiteren bevorzugten Ausführungsform weist die Arretiereinrichtung ein Federelement zum Bewegen des Halteelements in die Arretierposition, ein in Bezug auf die Ventilstange bewegbares Ankerteil und eine weitere Rückstellfeder auf. Das bewegbare Ankerteil stützt sich an dem zum Arretieren der Stützeinrichtung eingesetzten Halteelement ab. Die weitere Rückstellfeder ist zwischen dem bewegbaren Ankerteil und dem an der Ventilstange angeordeten Magnetanker angeordnet. Das bewegbare Ankerteil ist (ebenfalls) über die Erregerspule magnetisierbar, so dass eine Anziehung zwischen dem bewegbaren Ankerteil und dem Magnetanker gegen die Rückstellkraft der weiteren Rückstellfeder hervorrufbar, und dadurch das Halteelement über das dazugehörige Federelement in die Arretierposition bewegbar ist. Eine solche Ausgestaltung der Arretiereinrichtung macht es möglich, das Halteelement bei einem Aktivieren der elektromagnetischen Betätigungseinrichtung (d.h. bei einem Bestromen der Erregerspule) zuverlässig in die Arretierposition an der Stützeinrichtung zu bewegen. Bei einem Deaktivieren der Betätigungseinrichtung kann das Halteelement wieder zuverlässig von der Arretierposition entfernt werden. Hierbei werden das bewegbare Ankerteil und der Magnetanker durch die Einwirkung der weiteren Rückstellfeder wieder auseinandergedrückt, wodurch das bewegbare Ankerteil das Halteelement von dessen Arretierposition wegdrücken kann.

Die Arretierung der Stützeinrichtung und damit der Ventilstange macht es möglich, dass nach dem Auslenken der Ventilstange in die zweite Schaltposition eine elektrische Energiezufuhr zu dem Magnetventil bzw. eine Bestromung der Erregerspule weitgehend reduziert werden kann. Über die reduzierte bzw. minimale Bestromung kann die Anziehung zwischen dem bewegbaren Ankerteil und dem an der Ventilstange angeordneten Magnetanker aufrechterhalten werden, so dass das Halteelement in der Arretierposition verbleibt. Die kleine Bestromung ermöglicht ferner, die Erregerspule gegenüber einem herkömmlichen Magnetventil (wesentlich) kleiner zu dimensionieren.

Die oben beschriebene Abstützung zwischen dem bewegbaren Ankerteil und dem Halteelement ist vorzugsweise über eine bewegbare Hülse verwirklicht. Des Weiteren ist das Halteelement vorzugsweise in Form einer ringförmigen Scheibe ausgebildet. In einer solchen Ausgestaltung kann das Halteelement in der Arretierposition die Stützeinrichtung zuverlässig umschließen.

Das Magnetventil kann beispielsweise ein Umschaltventil sein. Hierbei kann das Ventil an verschiedenen Positionen auf der Ventilstange zwei Schließelemente, insbesondere in Form von um 180° gegeneinander gedrehten Dichtkegeln, aufweisen. Dabei kann in der ersten Schaltposition eines der Schließelemente an einem zugehörigen Ventilsitz des Magnetventils anliegen und diesen verschließen, wohingegen ein weiterer Ventilsitz nicht verschlossen ist. Mit der Auslenkung der Ventilstange in die zweite Schaltposition kann der zuvor verschlossene Ventilsitz geöffnet, und der weitere Ventilsitz durch das andere der beiden Schließelemente verschlossen werden, was eine Umschaltfunktion realisiert.

Des Weiteren kann das Magnetventil auch in Form eines Abschaltventils ausgebildet sein, bei dem auf der Ventilstange ein einzelnes Schließelement vorgesehen ist. Eine in dieser Hinsicht bevorzugte Ausführungsform besteht darin, dass die Stützeinrichtung an einem Ende der Ventilstange angeordnet ist. Die Ventilstange weist an einem entgegen gesetzten Ende ein Schließelement auf, welches bewegbar und mit Hilfe eines Federelements federnd an der Ventilstange angeordnet ist. Durch eine solche federnde Anordnung des Schließelements, welches mit einem entsprechenden Ventilsitz des Ventils zusammenwirken kann, können Bauteiltoleranzen ausgeglichen werden.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die Erfindung wird im Folgenden anhand der beigefügten Figuren näher erläutert. Es zeigen:

Figur 1 eine schematische seitliche Darstellung eines Magnetventils mit einer Federhülse als Stützeinrichtung in einem geöffneten Zustand;

Figur 2 eine schematische seitliche Darstellung des Ventils von Figur 1 in einem geschlossenen Zustand;

Figur 3 eine schematische seitliche Darstellung des Ventils von Figur 1 in einem Übergangszustand zwischen dem geschlossenen und dem geöffneten Zustand;

Figuren 4 bis 6 schematische Darstellungen einer alternativen Stützeinrichtung, welche in Form eines Kniehebel-Mechanismus ausgebildet ist;

Figuren 7 und 8 schematische Darstellungen einer weiteren alternativen Stützeinrichtung, welche zwei über ein Scharnier verbundene Stützelemente umfasst; und

Figuren und 9 und 10 schematische Darstellungen einer weiteren alternativen Stützeinrichtung, welche zwei gegeneinander verschiebbare Stützelemente umfasst.

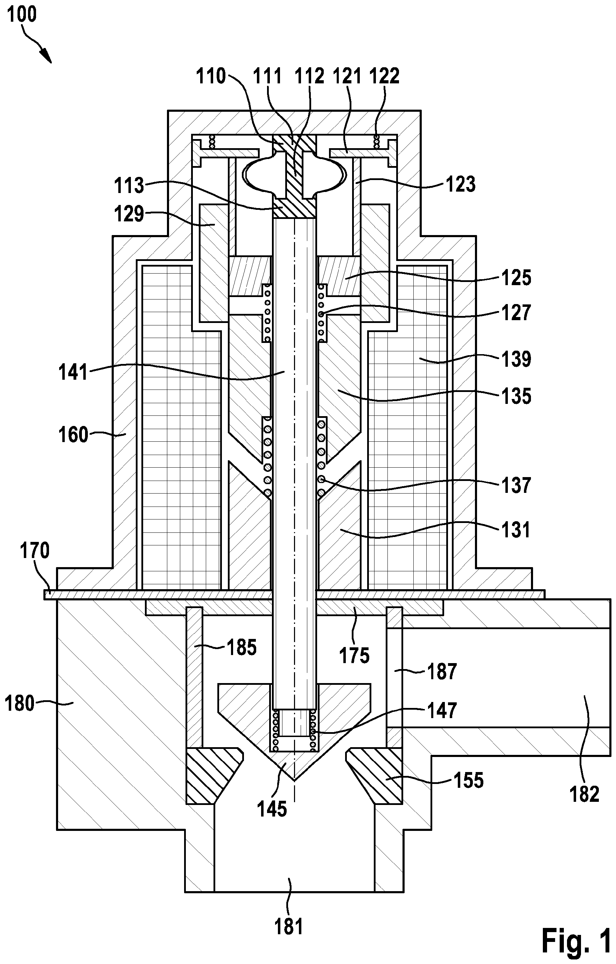

Figur 1 zeigt eine schematische seitliche Darstellung eines elektrisch ansteuerbaren Magnetventils 100 in einem geöffneten Zustand. Das als Abschaltventil ausgebildete Ventil 100, welches insbesondere in einem Kühlmittelkreislauf eines Kraftfahrzeugs zum Einsatz kommen kann, weist zwei Gehäuseteile 160, 180 auf. Die Gehäuseteile 160, 180, welche im Folgenden auch als Poltopf bzw. Polgehäuse 160 und als Ventilgehäuse 180 bezeichnet werden, sind über eine dazwischen angeordnete Montageplatte 170 miteinander verbunden.

Das Ventilgehäuse 180, welches für das Durchfließen eines Mediums bzw. einer Kühlflüssigkeit ausgebildet ist, umschließt einen Innenraum und weist zwei asymmetrisch angeordnete Anschlüsse 181, 182 auf. Über den in Figur 1 unteren Anschluss 181 kann das über eine Pumpe geförderte Kühlmittel dem Ventilgehäuse 180 zugeführt, und über den seitlichen Anschluss 182 abgeführt werden (nicht dargestellt).

In dem Innenraum weist das Ventilgehäuse 180 einen Ventilsitz 155 und ein mit dem Ventilsitz 155 zusammenwirkendes Schließelement in Form eines Dichtkegels 145 auf. Der Ventilsitz 155 kann in Form eines Dichtrings aus einem Elastomermaterial ausgebildet sein. Zum Fixieren des Ventilsitzes 155 ist in dem Ventilgehäuse 180 eine Abstandshülse 185 angeordnet, mit deren Hilfe der Ventilsitz 155 gegen einen im Bereich des unteren Anschlusses 181 vorliegenden Anschlag des Ventilgehäuses 180 verspannt ist. Die Abstandshülse 185 weist eine Öffnung 187 auf, welche auf den seitlichen Anschluss 182 abgestimmt ist. Wie des Weiteren in Figur 1 angedeutet ist, ist an einer Unterseite der Montageplatte 170 eine Dichtmanschette 175 vorgesehen, welche auf der Abstandshülse 185 aufliegt und die Abstandshülse 185 in Richtung des Ventilsitzes 155 drückt.

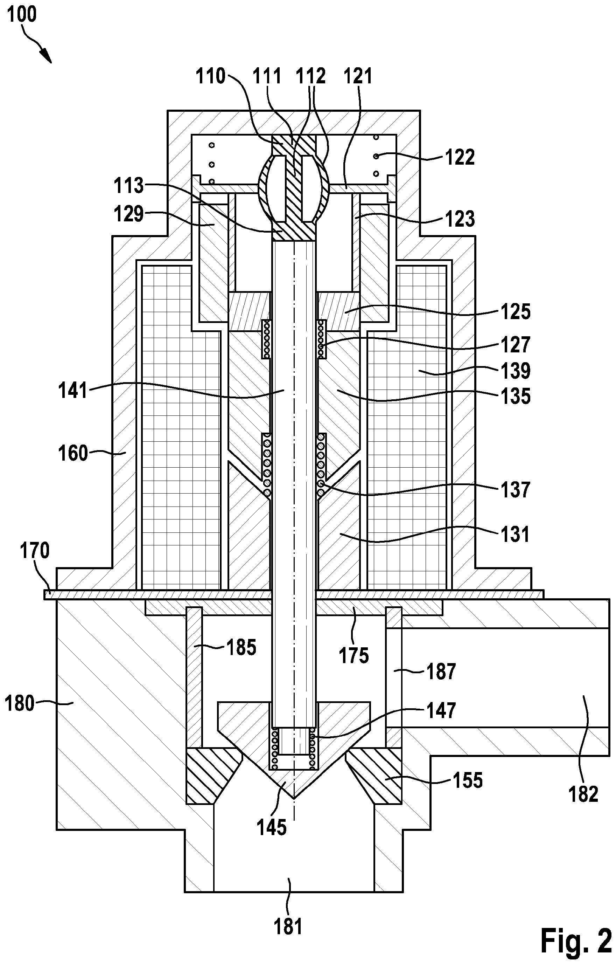

Der Dichtkegel 145 ist an einem unteren Ende einer verschiebbar gelagerten Ventilstange 141 angeordnet. Die Ventilstange 141 kann ausgehend von der in Figur 1 gezeigten ersten Schaltposition (Ausgangsposition bzw. "Ruhelage"), in welcher der Dichtkegel 145 und der Ventilsitz 155 voneinander beabstandet sind, in eine zweite Schaltposition ausgelenkt werden (siehe Figur 2). Dies wird auf elektromagnetische Weise durchgeführt. In der zweiten Schaltposition liegt der Dichtkegel 145 an dem Ventilsitz 155 an, wodurch das Ventil 100 geschlossen ist und kein Volumenstrom zwischen den Anschlüssen 181, 182 mehr möglich ist. Ausgehend von der zweiten Schaltposition kann die Hub- bzw. Ventilstange 141 wieder in die erste Schaltposition zurückgestellt werden.

Wie des Weiteren in Figur 1 dargestellt ist, weist der Dichtkegel 145 eine Ausnehmung auf, in welcher ein endseitiger Abschnitt der Ventilstange 141 aufgenommen ist. Innerhalb der Ausnehmung ist ferner zwischen der Ventilstange 141 und einem gegenüberliegenden Bodenbereich der Ausnehmung ein Federelement 147 angeordnet. Hierdurch ist der Dichtkegel 145 in axialer Richtung (d.h. bezogen auf eine Längsachse der Ventilstange 141) verschiebbar und federnd an der Ventilstange 141 angeordnet, wodurch Bauteiltoleranzen ausgeglichen werden können. Das Federelement 147 kann wie in Figur 1 angedeutet beispielsweise als Spiralfeder, oder alternativ als Blattfeder ausgebildet sein.

Die Auslenkung der Ventilstange 141 aus der ersten in die zweite Schaltposition und deren Rückkehr bzw. Rückstellung in die zweite Schaltposition wird mit Hilfe von in dem Polgehäuse 160 angeordneten Komponenten bewirkt. Hierfür ist die Ventilstange 141 durch entsprechende Öffnungen in der Dichtmanschette 175 und der Montageplatte 170 in das Innere des Polgehäuses 160 geführt. Zum Zwecke der Abdichtung der Durchführung kann die Dichtmanschette 175 im Bereich der Ventilstange 141 als Dichtbuchse ausgeführt sein oder eine solche Dichtbuchse umfassen (nicht dargestellt).

Das Auslenken der Ventilstange 141 aus der ersten in die zweite Schaltposition erfolgt durch eine elektromagnetische Betätigungseinrichtung, welche einen mit der Ventilstange 141 verbundenen Magnetanker 135, ein an der Montageplatte 170 angeordnetes bzw. hieran befestigtes Joch 131 (Gegenpol), und eine diese Bestandteile 131, 135 umschließende Erregerspule 139 umfasst. Das Joch 131 und der Magnetanker 135 sind aus einem ferromagnetischen Material ausgebildet, und weisen eine im Wesentlichen (hohl)zylinderförmige Form auf. Hierbei ist die Ventilstange 141 in mittiger Lage durch das als Führungshülse dienende Joch 131 geführt, und ist der Magnetanker 135 umfangsseitig an der Ventilstange 141 befestigt. Das Joch 131 weist ferner an einer Oberseite eine konusartige Ausnehmung auf. Der Magnetanker 135 weist an einer Unterseite einen kegelförmigen Abschnitt auf, welcher in seiner Kontur im Wesentlichen der Kontur des konusartigen Abschnitts des Jochs 131 entspricht. In diesem Bereich ist zwischen dem Joch 131 und dem Magnetanker 135 ferner eine Rückstellfeder 137 angeordnet, welche diese beiden Komponenten 131, 135 auseinanderdrücken, und dadurch ein Öffnen des Ventils 100 bzw. Halten desselben in der ersten bzw. offenen Schaltstellung bewirken kann. Die Rückstellfeder 137 kann wie in Figur 1 angedeutet zum Beispiel als Spiralfeder ausgebildet sein.

Zum Aktivieren der Betätigungseinrichtung wird die Erregerspule 139 bestromt. Hierdurch kann ein Magnetfeld erzeugt werden, wodurch eine Magnetisierung des Jochs 131 und des Magnetankers 135, und dadurch eine elektromagnetische Anziehungskraft zwischen diesen Bestandteilen 131, 135 hervorgerufen werden kann. Auf diese Weise kann der an der Ventilstange 141 angeordnete Magnetanker 135 in Richtung des Jochs 131 gezogen, und dadurch die Ventilstange 141 in die in Figur 2 gezeigte zweite Schaltposition verschoben werden, in welcher der Dichtkegel 145 an dem Ventilsitz 155 anliegt. Die elektromagnetische Kraft wirkt gegen eine Rückstellkraft, welche durch die Rückstellfeder 137, sowie (gegebenenfalls) durch einen auf den unterseitigen Anschluss 181 wirkenden hydraulischen Druck eines Mediums bzw. Kühlmittels hervorgerufen werden kann. In dem geschlossenen Ventilzustand kann wie in Figur 2 dargestellt ein Restabstand zwischen dem Magnetanker 135 und dem Joch 131 vorliegen, wodurch Bauteiltoleranzen ausgeglichen werden können. Sofern die Bestromung der Erregerspule 139 deaktiviert bzw. abgeschaltet wird, kann die Ventilstange 141 aufgrund des Einflusses der Rückstellkraft (und Deaktivierens einer Arretierfunktion, wie weiter unten beschrieben wird) wieder in die in Figur 1 gezeigte erste Schaltposition zurückkehren, in welcher das Ventil 100 geöffnet ist.

Bei einem herkömmlich aufgebauten Magnetventil erfordert das Aufrechterhalten des geschlossen Zustands (gegen die Rückstellkraft) eine relativ hohe dauerhafte Stromzufuhr zu der betreffenden Erregerspule. Da in diesem Zustand keine mechanische Arbeit verrichtet wird, wird die von der Spule aufgenommene elektrische Leistung vollständig in Wärme umgesetzt, was somit mit einer hohen Verlustleistung verbunden ist. Ein herkömmliches Magnetventil weist ferner einen durch diese thermische Randbedingung vorgegebenen Aufbau, insbesondere mit relativ großen Abmessungen der zugehörigen Erregerspule auf. Das in den Figuren 1 bis 3 gezeigte Ventil 100 ist demgegenüber mit einer Stützeinrichtung zum Abstützen der Ventilstange 141 und mit einer Arretiereinrichtung zum Arretieren der Stützeinrichtung in der geschlossenen (bestromten) Schaltposition ausgebildet, wodurch sich eine hohe dauerhafte Stromaufnahme vermeiden lässt.

Die Stützeinrichtung ist bei dem Ventil 100 als rückfedernder Kniehebel-Mechanismus ausgebildet, was wie in den Figuren 1 bis 3 dargestellt in Form einer Federhülse 110 verwirklicht ist. Die Federhülse 110 ist zwischen der Ventilstange 141 und einem oberen Ende des Polgehäuses 160 angeordnet, so dass sich die Federhülse 110 sowohl an der Ventilstange 141 als auch innenseitig an dem Polgehäuse 160 abstützen kann. Die Federhülse 110 weist zwei hohlzylinder- bzw. ringförmige Endabschnitte 111, 113, und mehrere (zum Beispiel drei, vier oder fünf) die Endabschnitte 111, 113 verbindende Verbindungsstege 112 auf. Der Endabschnitt 111 ist an dem Polgehäuse 160, und der andere Endabschnitt 113 ist an einem oberen Ende der Ventilstange 141 angeordnet.

Die Federhülse 110, welche auf einfache und kostengünstige Weise zum Beispiel aus einem metallischen Material wie insbesondere Federstahl herstellbar ist, weist durch die Verbindungsstege 112 und Aussparungen in ihrer Mantelfläche, und durch eine (radial) nach außen gerichtete Wölbung eine lampionartige Form auf. Eine Wölbung der Federhülse 110 liegt sowohl in dem geöffneten als auch in dem geschlossenen Schaltzustand des Ventils 100 vor (siehe Figuren 1 und 2).

Die Verbindungsstege 112 der Federhülse 110 haben die Wirkung von Blattfederbeinen, so dass die Federhülse 110 bei einer Kraftbeaufschlagung in axialer Richtung (d.h. bezogen auf eine Längserstreckung der Hülse 110 bzw. auf einen Verstellweg der Ventilstange 141) kontrahiert, und sich die Verbindungsstege 112 in Querrichtung nach außen ausdehnen ("ausbeulen"). Jeder der Verbindungsstege 112 kann als Anordnung von zwei aneinandergrenzenden Schenkeln eines Kniehebels aufgefasst werden, wobei entsprechende "Drehpunkte" am Übergang der Verbindungsstege 112 zu den Endabschnitten 111, 113, und in einem mittigen Bereich jedes Verbindungsstegs 112 vorliegen können. In der in Figur 1 gezeigten ersten Schaltposition der Ventilstange 141 befindet sich die Federhülse 110 in einem axial zusammengedrückten und nach außen ausgedehnten Zustand. Dabei ist die Federhülse 110 über die Ventilstange 141 an das Polgehäuse 160 angedrückt. Die Federhülse 110 ist derart dimensioniert, dass bei einer Längskontraktion der Federhülse 110 um die Länge des Verstellwegs der Ventilstange 141 die Querausdehnung der Federhülse 110 aufgrund des Kniehebeleffekts wesentlich größer ist als die Längskontraktion. Bei einem Auslenken der Ventilstange 141 in die in Figur 2 veranschaulichte zweite Schaltposition kann die Federhülse 110 selbständig die dargestellte, im Wesentlichen axial gestreckte Form mit einer geringen Wölbung einnehmen, wodurch die Federhülse 110 eine gegenüber der ersten Schaltposition größere Längsabmessung und eine kleinere Querabmessung aufweist. Die auch in diesem Zustand vorliegende Wölbung nach außen dient dazu, das Querausdehnungsverhalten der Federhülse 110 vorzugeben, um insbesondere ein nach innen gerichtetes Biegen der Verbindungsstege 112 zu vermeiden.

Die Arretiereinrichtung des Magnetventils 100, mit deren Hilfe die zum Abstützen der Ventilstange 141 eingesetzte Federhülse 110 arretierbar ist, umfasst wie in Figur 1 gezeigt ein axial verschiebbares Halteelement 121, ein zwischen dem Halteelement 121 und dem oberen Abschnitt des Polgehäuses 160 angeordnetes Federelement 122, ein die Ventilstange 141 umschließendes und in Bezug auf die Ventilstange 141 axial verschiebbares Ankerteil 125, und eine weitere Rückstellfeder 127. Das über das Federelement 122 an dem Polgehäuse 160 abgestützte Halteelement 121 kann beim Schließen des Ventils 100 mit Hilfe des Federelements 122 ausgehend von der in Figur 1 gezeigten Ausgangsposition in eine Arretierposition bewegt werden, in welcher das Halteelement 121 an der Federhülse 110 anliegt bzw. diese umschließt (siehe Figur 2). Hierauf wird weiter unten noch näher eingegangen. Das Halteelement 121 weist einen scheiben- bzw. kreisringförmigen Basisabschnitt auf, welcher eine (axiale) kreisförmige Öffnung umgibt. Außen weist das Halteelement 121 einen senkrecht zu dem Basisabschnitt verlaufenden Randabschnitt auf, über welchen das Halteelement 121 innenseitig an dem Polgehäuse 160 entlang gleiten kann.

Das Ankerteil 125, welches aus einem ferromagnetischen Material ausgebildet ist, stützt sich über eine axial verschiebbare Hülse 123 an dem Halteelement 121 ab. Dabei sind die Hülse 123 und das Federelement 122 an entgegen gesetzten Seiten des Halteelements 121 angeordnet. Das Halteelement 121 und die Hülse 123 können beide aus einem Kunststoffmaterial ausgebildet sein. Die weitere Rückstellfeder 127 ist zwischen dem bewegbaren Ankerteil 125 und dem an der Ventilstange 141 angeordneten Magnetanker 135 angeordnet, und kann eine auseinanderdrückende Kraft auf diese beiden Ankerteile 125, 135 ausüben. Wie in den Figuren 1 bis 3 angedeutet ist, können die weitere Rückstellfeder 127 und das Federelement 122 in Form von Spiralfedern ausgebildet sein. Zur mechanischen Führung des bewegbaren Ankerteils 125 und der bewegbaren Hülse 123 ist darüber hinaus eine umschließende Führungshülse 129 in dem Polgehäuse 160 vorgesehen, innerhalb derer sich das Ankerteil 125 und die Hülse 123 axial bewegen können. Die Führungshülse 129 ist ebenfalls aus einem ferromagnetischen Material ausgebildet.

Die Federhülse 110 und die einzelnen Federn 122, 127, 137 sind hinsichtlich der Federwirkungen derart abgestimmt, dass das Ventil 100 im stromlosen Zustand auch ohne Einfluss eines auf den Anschluss 181 einwirkenden Kühlmitteldrucks die in Figur 1 gezeigte offene Schaltstellung einnimmt bzw. in dieser Stellung gehalten wird. Hierzu ist die Federkonstante $K137$ der Rückstellfeder 137 größer als die Summe der Federkonstanten $K110$, $K122$, $K127$ der Federhülse 110 und der Federn 122, 127, d.h.

$$K137 > (K110 + K122 + K127).$$

Des Weiteren weist die weitere Rückstellfeder 127 eine größere Federkonstante auf als das Federelement 122, d.h.

$$K127 > K122,$$

wodurch in stromlosem Zustand der Spule 139 ein Entfernen des Halteelements 121 von der Arretierposition bewirkt werden kann.

Die Funktionsweise der Federhülse 110 und deren Arretierung wird im Folgenden anhand eines Schließvorgangs des Ventils 100 näher beschrieben. Das Ventil 100 befindet sich dabei anfänglich in dem in Figur 1 gezeigten (ersten) offenen bzw. stromlosen Schaltzustand. Zum Schließen des Ventils 100 wird durch Bestromung der Erregerspule 139 ein Magnetfeld erzeugt, wodurch das Joch 131, der Magnetanker 135 und das bewegbare Ankerteil 125 magnetisiert werden. Aufgrund der hierbei auftretenden Anziehungskraft zwischen dem Magnetanker 135 und dem Joch 131 wird die Ventilstange 141 unter Zusammendrücken der Rückstellfeder 137 nach unten in die in Figur 2 gezeigte (zweite) geschlossene Schaltposition bewegt. Des Weiteren liegt auch eine Anziehungskraft zwischen dem bewegbaren Ankerteil 125 und dem Magnetanker 135 vor, wodurch das Ankerteil 125 unter Zusammendrücken der weiteren Rückstellfeder 127 zu dem Magnetanker 135 bewegt wird. Dabei kann die Führungshülse 129 die Führung von Magnetfeldlinien zwischen dem Polgehäuse 160 und dem bewegbaren Ankerteil 125 bewirken.

Im geschlossenen Zustand des Ventils 100 wird der Dichtkegel 145 über die Ventilstange 141 mit einer hinreichend großen Dichtkraft an den Ventilsitz 155 angedrückt, welche größer ist als eine vorgegebene Minimalkraft. Die Minimalkraft, welche zum Beispiel 20N betragen kann, richtet sich nach der entgegen wirkenden Gegenkraft, welche im Wesentlichen durch die Rückstellfeder 137 und den hydraulischen Kühlmitteldruck hervorgerufen werden kann. In diesem Zustand ist das zwischen dem Dichtkegel 145 und der Ventilstange 141 angeordnete Federelement 147 (etwas) angespannt bzw. kontrahiert. Über das Federelement 147 können (axiale) Bauteiltoleranzen ausgeglichen werden, so dass der Dichtkegel 145 mit der vorgesehenen Dicht- bzw. Schließkraft an dem Ventilsitz 155 gehalten wird, und dadurch das Ventil 100 sicher verschlossen ist.

Die Bewegung bzw. Auslenkung der Ventilstange 141 in die geschlossene bzw. zweite Schaltposition hat ferner zur Folge, dass sich die Federhülse 110 ausgehend von dem zusammengedrückten Zustand axial ausdehnen kann (siehe Figur 2). Die einhergehende Querkontraktion der Federhülse 110 führt dazu, dass sich die Federhülse 110 auf eine kleinere Querabmessung bzw. auf einen minimalen Durchmesser verjüngt. Da zudem das bewegbare Ankerteil 125 in Richtung des Magnetankers 135 gezogen wird, kann das sich an dem Gehäuseabschnitt des Polgehäuses 160 abstützende (und zuvor kontrahierte) Federelement 122 ausdehnen, und dadurch das Halteelement 121 zusammen mit der Hülse 123 von dem betreffenden Polgehäuseabschnitt wegdrücken. Auf diese Weise wird das Halteelement 121 ausgehend von der in Figur 1 gezeigten Ausgangsposition in die Arretierposition bewegt, in welcher das Halteelement 121 an der Federhülse 110 anliegt. In der Arretierposition ist das Halteelement 121 wie in Figur 2 gezeigt mittig (d.h. bezogen auf die axiale Richtung) an der Federhülse 110 angeordnet, was durch eine entsprechende Ausgestaltung des Ventils 100, insbesondere der Länge der zwischen dem Halteelement 121 und dem Ankerteil 125 vorliegenden Hülse 123, erzielt werden kann. Das Halteelement 121 bzw. dessen innen liegende Öffnung ist derart dimensioniert, dass erst die Verkleinerung der Querabmessung der Federhülse 110 die Bewegung in die Arretierposition ermöglicht.

In der Arretierposition können sich die Federbeine bzw. Verbindungsstege 112 der Federhülse 110 an einem die Öffnung des Haltelements 121 umgebenden Rand bzw. an einer hier vorliegenden inneren Mantelfläche abstützen. Auf diese Weise kann das Halteelement 121 eine entsprechende Haltekraft bereitstellen, welche einer Querausdehnung und dadurch einem axialen Zusammendrücken der Federhülse 110 entgegenwirkt, so dass die Federhülse 110 eine relativ hohe axiale Steifigkeit gewinnt. Die Ventilstange 141 kann sich daher auf der Federhülse 110 abstützen, wodurch das Ventil 100 auf zuverlässige Weise geschlossen halten werden kann.

Die Schließkraft des Ventils 100 ist nunmehr - im Gegensatz zu einem herkömmlichen Magnetventil - nicht mehr allein abhängig von der magnetischen Anziehung zwischen dem Magnetanker 135 und dem Joch 131, sondern zusätzlich von der mit Hilfe des Haltelements 121 und der Federhülse 110 erzielten Arretierung der Ventilstange 141. Hierdurch ist es möglich, nach Erreichen des geschlossenen Ventilstands und "Aktivierens" der Arretierung der Ventilstange 141 die Bestromung der Erregerspule 139 weitgehend zu reduzieren. Beispielsweise ist es möglich, den elektrischen Strom um ca. 90% auf etwa ein Zehntel eines Anfangswerts (d.h. Stromwerts während des Schließvorgangs) zu reduzieren. Die reduzierte bzw. minimale Bestromung erfolgt im Wesentlichen lediglich zu dem Zweck, das Halteelement 121 in der Arretierposition zu halten. Der elektrische Strom ("Haltestrom") richtet sich daher im Wesentlichen nach der Anziehungskraft zwischen dem bewegbaren Ankerteil 125 und dem Magnetanker 135, den Federkonstanten der Rückstellfeder 127 und des Federelements 122, sowie der Reibungskraft zwischen der Federhülse 110 und dem Halteelement 121.

Das Arretieren der Ventilstange 141 gemäß dem vorstehend beschriebenen Mechanismus bietet ferner die Möglichkeit, die Erregerspule 139 des Ventils 100 gegenüber einem herkömmlichen Magnetventil wesentlich kleiner zu dimensionieren. Die Dynamik des Schließvorgangs, sowie die Schließkraft des Ventils 100 können dabei unverändert bleiben, oder gegebenenfalls sogar gesteigert werden.

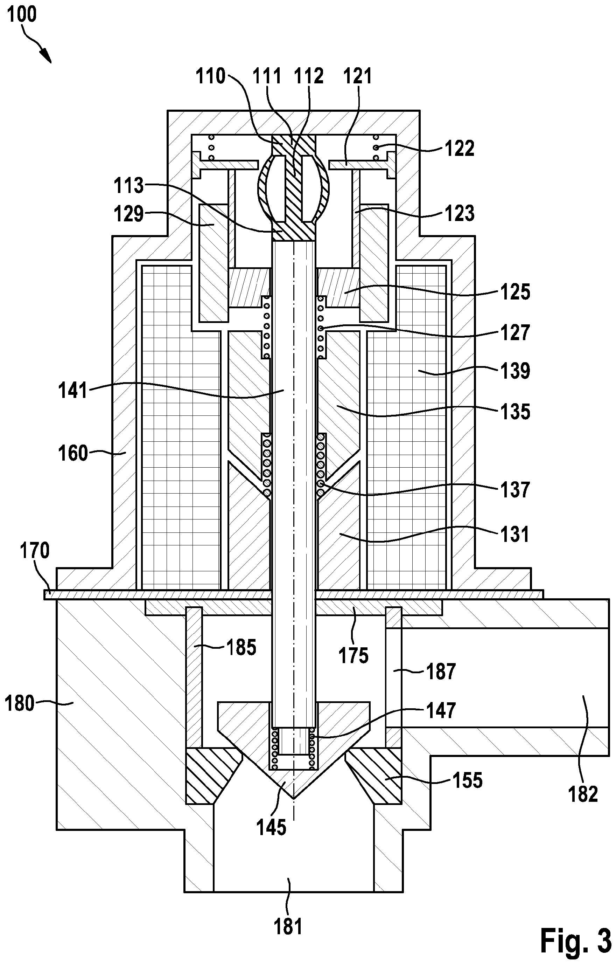

Zum Öffnen des Ventils 100 wird die minimale Bestromung der Erregerspule 139 unterschritten bzw. abgeschaltet. Dies hat zur Folge, dass die Anziehungskraft zwischen dem bewegbaren Ankerteil 125 und dem Magnetanker 135 so weit sinkt bzw. wegfällt, dass die dazwischen befindliche Rückstellfeder 127 wie in Figur 3 gezeigt das bewegbare Ankerteil 125, und dadurch die Hülse 123 und das Halteelement 121 gegen die Kraft des Federelements 122 axial nach oben verschieben kann. Dies ist möglich, da die Federkonstante K127 wie oben angegeben größer ist als die Federkonstante K122. Das Halteelement 121 wird daher von dessen Arretierposition entfernt, wodurch sich die Verbindungsstege 112 der Federhülse 110 nicht mehr länger auf der inneren Mantelfläche des Halteelements 121 abstützen können, und infolgedessen die Federhülse 110 ihre hohe axiale Steifigkeit verliert. Auf diese Weise können der Magnetanker 135 und damit die Ventilstange 141 durch den Einfluss der Rückstellfeder 137 (und gegebenenfalls durch den Einfluss eines Kühlmitteldrucks) unter Zusammendrücken der Federhülse 110 nach oben in die erste Schaltposition bewegt werden, wodurch das Ventil 100 wieder den in Figur 1 gezeigten geöffneten Zustand einnehmen kann. Dieser Öffnungsmechanismus realisiert ein sicheres Verhalten im Fehlerfall bzw. eine Fail-Safe-Funktion des Ventils 100, da er bei Fehlerfällen (zum Beispiel Spannungsabfall, Kontaktverlust usw.) automatisch auslöst.

Im geöffneten Ventilzustand ist der Dichtkegel 145 (wieder) von dem Ventilsitz 155 getrennt. Zu diesem Zweck ist der Verstellweg des zwischen dem Dichtkegel 145 und der Ventilstange 141 angeordneten Federelements 147 derart dimensioniert, dass die maximale axiale Toleranz des Ventils 100 nicht überschritten, und dadurch der Öffnungshub des Dichtkegels 145 und eine für den Volumenstrom vorgegebene Querschnittsfläche des Ventils 100 nicht unterschritten wird.

Die als Kniehebel-Mechanismus wirkende und sich an dem Polgehäuse 160 abstützende Federhülse 110 kann grundsätzlich eine außenseitig einwirkende Haltekraft, welche radial bzw. seitlich auf die Verbindungsstege 121 einwirken kann, in eine axial auf die Ventilstange 141 einwirkende Stützkraft umsetzen. Aufgrund des Kniehebel-Effekts ist das Verhältnis aus Haltekraft und Stützkraft nichtlinear abhängig von der jeweiligen (kontrahierten) Form der Federhülse 110, und damit von der Auslenkung der Ventilstange 141. Dieses nichtlineare Verhalten wird bei dem Ventil 100 dazu genutzt, um die Arretierung der Federhülse 110 und damit der Ventilstange 141 mit einer relativ kleinen Haltekraft zu verwirklichen. Die Haltekraft wird hierbei wie oben beschrieben lediglich in dem axial gestreckten Zustand der Federhülse 110 durch das in die Arretierposition bewegte Halteelement 121 auf die Federhülse 110 übertragen. In diesem Zustand ist die von dem Halteelement 121 auf die Federhülse 110 übertragene Haltekraft wesentlich kleiner als die auf die Ventilstange 141 einwirkende Stützkraft. Über die Federhülse 110 kann somit eine relativ kleine Haltekraft in eine relativ große, auf die Ventilstange 141 einwirkende und das Ventil 100 geschlossen haltende Stützkraft umgesetzt werden. Desgleichen hat eine große Krafteinwirkung von der Ventilstange 141 auf die Federhülse 110 (= Gegenkraft zur Stützkraft) lediglich eine kleine Krafteinwirkung von der Federhülse 110 auf das Halteelement 121 (= Gegenkraft zur Haltekraft) zur Folge. Dadurch ist es möglich, das Halteelement 121 zuverlässig und mit relativ wenig Kraftaufwand mit Hilfe der Rückstellfeder 127 wieder von der Arretierposition zu entfernen.

Hinsichtlich der möglichen Reduzierung bzw. Minimierung der Bestromung werden im Folgenden ergänzend die maßgeblichen Einflussgrößen betrachtet. Im geschlossenen und arretierten Zustand des Ventils 100 überkompensiert die zwischen dem Ankerteil 125 und dem Magnetanker 135 wirkende magnetische Anziehungskraft die resultierende Federkraft der gegeneinander wirkenden Federn 122, 127. Eine minimale Anziehungskraft zum Aufrechterhalten des geschlossenen Zustands kann somit mit einer möglichst geringen Differenz zwischen den Federkonstanten der Federn 122, 127 erzielt werden.

Zu berücksichtigen ist ferner, dass das Ventil 100 abhängig von dessen Montageposition Schwingungen ausgesetzt sein kann. Dieser Fall liegt zum Beispiel dann vor, wenn das Ventil 100 an einem Verbrennungsmotor eines Kraftfahrzeugs angeordnet ist. Das Aufrechterhalten des geschlossenen Ventilzustands erfordert daher, dass eine hierbei auftretende und das Ankerteil 125 von dem Magnetanker 135 wegziehende Beschleunigungskraft (ebenfalls) durch die magnetische Anziehungskraft kompensiert wird. Da die Anziehungskraft mit abnehmendem Abstand zwischen dem Ankerteil 125 und dem Magnetanker 135 exponentiell steigt, kann die Minimierung der Stromaufnahme im geschlossenen Ventilzustand durch einen möglichst kleinen Abstand zwischen den beiden Ankerteilen 125, 135 begünstigt werden. Sofern aus Gründen der Geräuschemission beim Schließvorgang ein Direktkontakt zwischen dem Ankerteil 125 und dem Magnetanker 135 nicht möglich ist, kann gegebenenfalls eine relativ dünne kreisringförmige Kunststoffscheibe (mit einer Dicke von beispielsweise maximal 0,1mm) zur Geräuschdämpfung zwischen den Ankerteilen 125, 135 angeordnet werden. Eine Minimierung der auf das bewegbare Ankerteil 125 einwirkenden Beschleunigungskraft kann ferner dadurch begünstigt werden, dass das Ankerteil 125 möglichst klein und damit leicht dimensioniert wird. Durch Optimierung dieser Einflussgrößen (d.h. Dimensionierung der Federn 122, 127, Minimalabstand zwischen den Ankerteilen 125, 135, Dimensionierung des bewegbaren Ankerteils 125) ist die Möglichkeit gegeben, den dem Ventil 100 zugeführten elektrischen Strom bzw. Haltestrom im geschlossenen Ventilzustand auf weniger als 10% des bei konventioneller Magnetventilausführung zugeführten Stroms zu reduzieren.

Bei dem Ventil 100 können anstelle der Federhülse 110 auch anders aufgebaute Stützeinrichtungen zum Einsatz kommen, welche in vergleichbarer Weise zwischen der Ventilstange 141 und dem oberen Abschnitt des Polgehäuses 160 angeordnet, sowie über die Arretiereinrichtung mit dem Halteelement 121 arretiert werden können. Mögliche Ausführungsformen werden anhand der folgenden Figuren näher beschrieben. Es wird darauf hingewiesen, dass in Bezug auf bereits beschriebene Details, welche sich auf gleichartige oder übereinstimmende Komponenten und Merkmale (beispielsweise die Funktionsweise der elektromagnetischen Betätigungseinrichtung und der Arretiereinrichtung des Ventils 100), mögliche Vorteile usw. beziehen, auf die vorstehenden Ausführungen verwiesen wird.

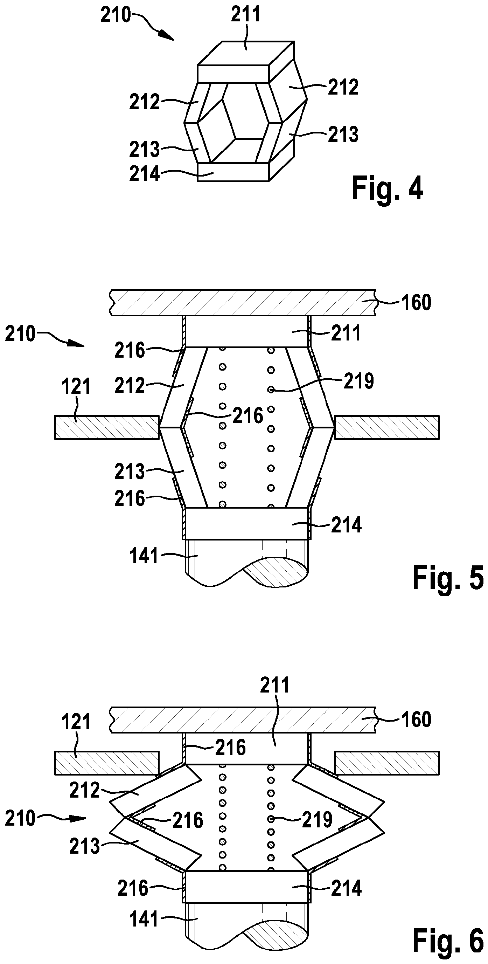

Die Figuren 4 bis 6 zeigen perspektivisch und von der Seite eine Stützeinrichtung 210, welche unmittelbar in Form eines Kniehebel-Mechanismus ausgebildet ist. Die Stützeinrichtung 210 weist zwei plattenförmige Endabschnitte 211, 214 auf, zwischen denen zwei seitliche Abstützstrukturen in Form von aneinandergrenzenden Seitenabschnitten 212, 213 angeordnet sind. Die Seitenabschnitte 212, 213 bilden die Schenkel eines Kniehebels. Im Hinblick auf eine Verwendung in dem Ventil 100 kann beispielsweise der Endabschnitt 211 an dem Polgehäuse 160, und kann der andere Endabschnitt 214 wie in den Figuren 5 und 6 angedeutet an der Ventilstange 141 angeordnet sein.

Wie des Weiteren in den Figuren 5 und 6 gezeigt ist, sind die Endabschnitte 211, 214 über Filmscharniere 216 mit den Seitenabschnitten 212, 213 verbunden. Über Filmscharniere 216 sind auch die aneinandergrenzenden Seitenabschnitte 212, 213 miteinander verbunden. Hierdurch können die Seitenabschnitte 212, 213 gegeneinander, und auch gegenüber den Endabschnitten 211, 214 gedreht und damit ausgelenkt werden. Die Anordnung aus den Endabschnitten 211, 214, den Seitenabschnitten 212, 213 und den Filmscharnieren 216 kann zum Beispiel in Form eines Kunststoffspritzgussteils ausgebildet sein.

Die Stützeinrichtung 210 weist ferner ein zwischen den Endabschnitten 211, 214 angeordnetes Federelement 219 auf, welches wie in den Figuren 5 und 6 angedeutet in Form einer Spiralfeder vorliegen kann. Aufgrund des rückstellenden Federelements 219 kann die Stützeinrichtung 210 selbständig die in Figur 5 gezeigte (axial) gestreckte Form einnehmen. Hierbei sind die Seitenabschnitte 212, 213 an den Seiten der Stützeinrichtung 210 (leicht) schräg nach außen verlaufend ausgerichtet, was durch eine parallelogrammartige Querschnittsform der Seitenabschnitte 212, 213 bedingt ist. Durch diese Ausgestaltung kann das Querausdehnungsverhalten der Stützeinrichtung 210 vorgegeben werden, d.h. dass die Stützeinrichtung 210 vergleichbar zu der Federhülse 110 bei einer axialen Krafteinwirkung nur eine Querausdehnung vollzieht. Eine solche Krafteinwirkung mit der Folge einer Längskontraktion, was durch Verschieben der an dem Endabschnitt 214 anliegenden Ventilstange 141 in die erste Schaltposition entsprechend Figur 1 hervorgerufen werden kann, ist in Figur 6 gezeigt. Gegenüber dem Zustand von Figur 5 sind die Seitenabschnitte 212, 213 hierbei stärker nach außen abgewinkelt, so dass die Stützeinrichtung 210 eine größere Querabmessung besitzt.

Die Stützeinrichtung 210 kann daher vergleichbar zu der Federhülse 110 in der oben beschriebenen Weise mit Hilfe des Halteelements 121 arretiert werden. In dem in Figur 6 gezeigten Zustand (Ventilstange 141 in der ersten Schaltposition, geöffnetes Ventil 100) befindet sich das Halteelement 121 in dessen Ausgangsposition. Zum Schließen des Ventils 100 wird die Ventilstange 141 durch Bestromen der Erregerspule 139 in die zweite Schaltposition entsprechend Figur 2 ausgelenkt. Die Stützeinrichtung 210 kann folglich in den in Figur 5 gezeigten gestreckten Zustand übergehen, in welchem die Stützeinrichtung 210 eine minimale Querabmessung aufweist. Dadurch kann das Halteelement 121 in die Arretierposition bewegt werden, in welcher das Halteelement 121 in mittiger Lage an der Stützeinrichtung 210 bzw. an den Seitenabschnitten 212, 213 anliegen kann. Das Halteelement 121 bzw. dessen innen liegende Öffnung ist derart dimensioniert, dass erst die Verkleinerung der Querabmessung der Stützeinrichtung 210 die Bewegung in die Arretierposition ermöglicht. Entsprechend der Form der Stützeinrichtung 210 kann das Halteelement 121 hierbei statt der oben beschriebenen kreisförmigen Öffnung beispielsweise eine reckteckförmige oder quadratische Öffnung aufweisen.

In der Arretierposition kann das Halteelement 121 eine entsprechende Haltekraft bereitstellen, welche einer Querausdehnung und einem axialen Zusammendrücken der Stützeinrichtung 210 entgegenwirkt. Dadurch besitzt die Stützeinrichtung 210 eine relativ hohe axiale Steifigkeit, so dass das Ventil 100 auf zuverlässige Weise geschlossen gehalten werden kann. Hierdurch ist es erneut möglich, die Bestromung der Erregerspule 139 auf einen minimalen Wert zu reduzieren. Sofern die minimale Bestromung wegfällt (oder unterschritten wird) und infolgedessen das Halteelement 121 von der Arretierposition entfernt wird, verliert die Stützeinrichtung 210 die hohe Festigkeit. Daher kann die Stützeinrichtung 210 (gegen die Kraft des Federelements 219) axial zusammengedrückt werden, wodurch die Ventilstange 141 in die erste Schaltposition zurückkehren kann.

Die an dem Polgehäuse 160 abgestützte Stützeinrichtung 210 weist aufgrund des Kniehebel-Effekts ebenfalls ein nichtlinear von der Auslenkung der Ventilstange 141 abhängiges Verhältnis zwischen einer außenseitig auf die Stützeinrichtung 210 bzw. auf deren Seitenabschnitte 212, 213 einwirkenden Haltekraft und einer auf die Ventilstange 141 einwirkenden Stützkraft auf. In dem axial gestreckten Zustand von Figur 5 ist die mit dem Halteelement 121 bereitgestellte Haltekraft wesentlich kleiner als die Stützkraft. Daher kann das Lösen der Arretierung, bei welchem das Halteelement 121 von dessen Arretierposition entfernt wird, mit einem relativ geringen Kraftaufwand vollzogen werden.

Eine Stützeinrichtung mit einem nichtlinearen Übertragungsverhalten kann auch auf andere Weise als durch einen Kniehebel-Mechanismus verwirklicht sein. Mögliche Ausgestaltungen werden anhand der folgenden Figuren beschrieben.

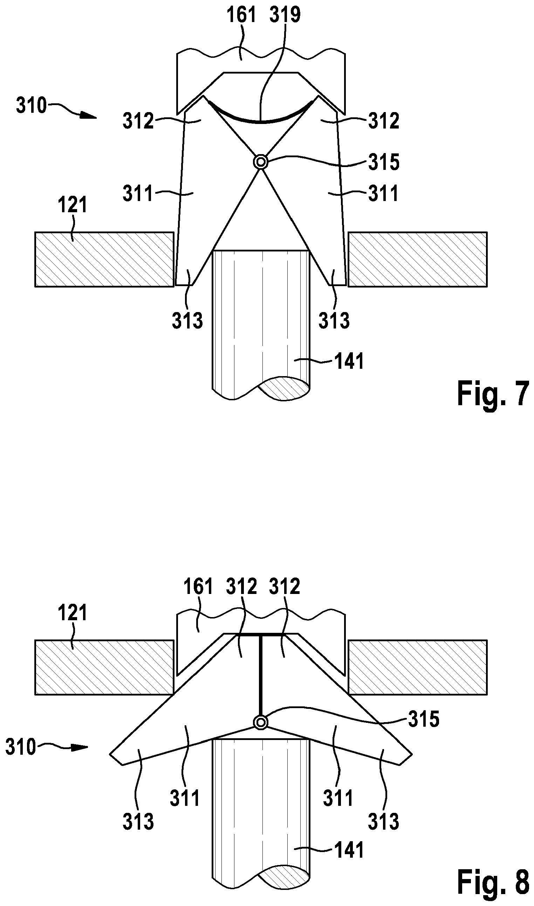

Die Figuren 7 und 8 zeigen in einer seitlichen Darstellung eine weitere Stützeinrichtung 310, welche zwei im Wesentlichen dreieckförmige und spiegelsymmetrisch zueinander angeordnete Stützelemente 311 aufweist. Die Stützelemente 311 sind an einander zugewandten "Eckpunkten" über ein Scharnier 315 miteinander verbunden, und können dadurch gegeneinander bewegt bzw. gedreht werden. Im Rahmen der Anwendung in dem Ventil 100 ist die Ventilstange 141 innenseitig zwischen keilförmigen Teilabschnitten 313 der Stützelemente 311 abgestützt. An einer hierzu entgegen gesetzten Seite sind die Stützelemente 311 mit keilförmigen Teilabschnitten 312 an dem Polgehäuse 160, d.h. an bzw. innerhalb einer hier vorgesehenen Aufnahmestruktur 161 abgestützt. Die Aufnahmestruktur 161 weist eine trapezförmige Ausnehmung mit nach außen schräg verlaufenden Wandabschnitten auf. In gleicher Weise sind die Teilabschnitte 312 der Stützelemente 311 mit abgeschrägten Enden versehen. Durch diese Ausgestaltung der Aufnahmestruktur 161 und der Teilabschnitte 312 wird ein vereinfachtes Gleiten der Teilabschnitte 312 bei der Drehbewegung der Stützelemente 311 ermöglicht.

Die Stützeinrichtung 310 weist des Weiteren ein zwischen den Teilabschnitten 312 der Stützelemente 311 angeordnetes Federelement 319 auf, welches wie in Figur 7 angedeutet in Form einer (gebogenen) Blattfeder vorliegen kann. Durch das rückstellende Federelement 319 können die Stützelemente 311 selbständig in die in Figur 7 gezeigte Stellung gedreht werden, so dass die Stützeinrichtung 310 eine axial gestreckte, ausgedehnte Form besitzt.

Durch eine axiale Krafteinwirkung, hervorgerufen durch Verschieben der zwischen den Teilabschnitten 313 der Stützelemente 311 angeordneten Ventilstange 141 in die erste Schaltposition entsprechend Figur 1, können die Stützelemente 311 in die in Figur 8 gezeigte Stellung gedreht werden. Dabei werden die Teilabschnitte 313 der Stützelemente 311 auseinander-, und dadurch die Teilabschnitte 312 unter Zusammendrücken des Federelements 319 aufeinander zu bzw. aneinander gedrückt. Die Stützeinrichtung 310 weist in dem Zustand von Figur 8 eine gegenüber dem Zustand von Figur 7 größere Querabmessung auf.

Die Stützeinrichtung 310 kann infolgedessen ebenfalls in der oben beschriebenen Weise mit Hilfe des Halteelements 121 arretiert werden. In dem in Figur 8 gezeigten Zustand (Ventilstange 141 in der ersten Schaltposition, geöffnetes Ventil 100) befindet sich das Halteelement 121 in dessen Ausgangsposition. Zum Schließen des Ventils 100 wird die Ventilstange 141 durch Bestromen der Erregerspule 139 in die zweite Schaltposition entsprechend Figur 2 ausgelenkt. Die Stützelemente 311 können hierbei über das Federelement 319 in die in Figur 7 gezeigte Stellung gedreht werden, in welcher die Enden der Teilabschnitte 313 relativ nah beieinander liegen, und infolgedessen die Stützeinrichtung 310 eine kleine(re) Querabmessung besitzt. Dadurch kann das Halteelement 121 in die Arretierposition bewegt werden, in welcher das Halteelement 121 außenseitig an der Stützeinrichtung 310 bzw. an den Enden der Teilabschnitte 313 anliegen kann. Das Halteelement 121 bzw. dessen innen liegende Öffnung ist derart dimensioniert, dass erst die Drehbewegung der Stützelemente 311 in die in Figur 7 gezeigte Stellung die Bewegung in die Arretierposition ermöglicht. Entsprechend der Form der Stützeinrichtung 310 kann die Öffnung des Halteelements 121 auch hier beispielsweise eine reckteckförmige oder quadratische Kontur besitzen.

In der Arretierposition kann das Halteelement 121 eine entsprechende Haltekraft bereitstellen, welche einer hierzu entgegen gesetzten Drehung der Stützelemente 311 entgegenwirkt. Dadurch weist die Stützeinrichtung 310 eine relativ hohe Stabilität bzw. Festigkeit auf, wodurch das Ventil 100 auf zuverlässige Weise geschlossen gehalten werden kann. Die Bestromung der Erregerspule 139 kann somit auch hier auf einen minimalen Wert reduziert werden. Sofern die minimale Bestromung wegfällt (oder unterschritten wird) und infolgedessen das Halteelement 121 von der Arretierposition entfernt wird, verliert die Stützeinrichtung 310 die hohe Festigkeit. Daher kann die Ventilstange 141 die Teilabschnitte 313 wieder auseinanderdrücken und die Stützelemente 311 in die in Figur 8 gezeigte Stellung drehen, so dass die Ventilstange 141 unter axialer "Verkleinerung" der Stützeinrichtung 310 in die erste Schaltposition zurückkehren kann.

Die an dem Polgehäuse 160 bzw. an der Aufnahmestruktur 161 abgestützte Stützeinrichtung 310 weist ebenfalls ein nichtlinear von der Auslenkung der Ventilstange 141 abhängiges Verhältnis zwischen einer außenseitig auf die Stützeinrichtung 310 bzw. auf die Teilabschnitte 313 einwirkenden Haltekraft und einer auf die Ventilstange 141 einwirkenden Stützkraft auf. In dem axial ausgedehnten Zustand von Figur 7 ist die mit dem Haltelement 121 bereitgestellte Haltekraft wesentlich kleiner als die Stützkraft. Daher kann das Lösen der Arretierung mit einem relativ geringen Kraftaufwand durchgeführt werden.

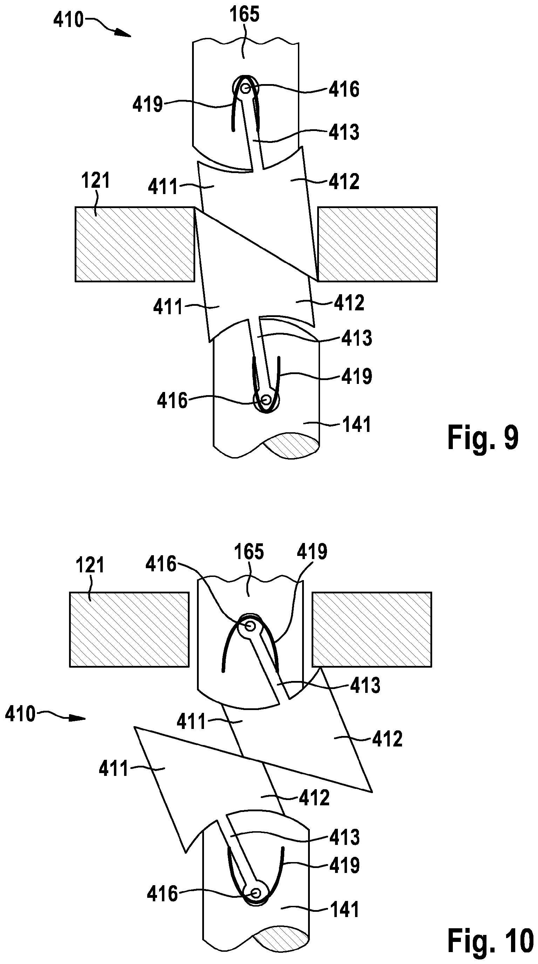

Die Figuren 9 und 10 zeigen in einer seitlichen Darstellung eine weitere Stützeinrichtung 410, welche zwei gegeneinander verschiebbare Stützelemente 411 umfasst. Die Stützelemente 411 weisen im Wesentlichen keilförmige Teilabschnitte 412 auf, an deren schräg verlaufenden vorderseitigen Flächen die Stützelemente 411 aneinander entlang gleiten können. Eines der Stützelemente 411 ist drehbar an der Ventilstange 141, und das andere der beiden Stützelemente 411 ist drehbar an dem Polgehäuse 160 bzw. an einem hier vorgesehenen Befestigungsabschnitt 165 angeordnet und abgestützt. Zu diesem Zweck weisen die Stützelemente 411 sich von den Teilabschnitten 412 erstreckende stegförmige Teilabschnitte 413 auf, an deren Ende Scharniere 416 zur drehbaren Verbindung mit der Ventilstange 141 und dem Befestigungsabschnitt 165 vorgesehen sind. Dabei können pro Stützelement 411 ein, oder auch zwei derartige und an entgegen gesetzten Seiten der Ventilstange 141 und des Befestigungsabschnitt 165 vorliegende Teilabschnitte 413 vorgesehen sein. Zur Verbesserung der Abstützung und zur Führung der drehbaren Stützelemente 411 sind sowohl die Teilabschnitte 412 als auch das Ende der Ventilstange 141 und des Befestigungsabschnitts 165 mit aufeinander abgestimmten gekrümmten bzw. teilkreisförmigen Anlageflächen ausgebildet.

Die Stützeinrichtung 410 weist darüber hinaus zwei Federelemente 419 auf, welche im Bereich der beiden Scharniere 416 angeordnet sind und in Form von bogenförmigen Blattfedern vorliegen können. Mit Hilfe der rückstellenden Federelemente 419, welche mit einem Ende an den stegförmigen Teilabschnitten 413 anliegen können, können die Stützelemente 411 selbständig in die in Figur 9 gezeigte Stellung gedreht werden, in welcher die Stützeinrichtung 410 eine axial gestreckte bzw. ausgedehnte Form besitzt.

Durch eine axiale Krafteinwirkung, hervorgerufen durch Verschieben der Ventilstange 141 in die erste Schaltposition entsprechend Figur 1, können die Stützelemente 411 in die in Figur 10 gezeigte Stellung gedreht werden. Dabei werden die Stützelemente 411 unter Auseinanderdrücken der Federelemente 419 in einander entgegen gesetzte Richtungen bzw. voneinander weg gedreht, wobei die Stützelemente 411 an den schrägen Flächen der Teilabschnitte 412 aneinander entlang gleiten können. Die Stützeinrichtung 410 weist in dem Zustand von Figur 10 eine gegenüber dem Zustand von Figur 9 größere Querabmessung auf.

Aufgrund dieser Funktionsweise kann die Stützeinrichtung 410 in der oben beschriebenen Weise mit Hilfe des Halteelements 121 arretiert werden. In dem in Figur 10 gezeigten Zustand (Ventilstange 141 in der ersten Schaltposition, geöffnetes Ventil 100) befindet sich das Halteelement 121 in dessen Ausgangsposition. Zum Schließen des Ventils 100 wird die Ventilstange 141 durch Bestromen der Erregerspule 139 in die zweite Schaltposition entsprechend Figur 2 ausgelenkt. Die Stützelemente 411 können hierbei mit Hilfe der Federelemente 419 aufeinander zu und daher in die in Figur 9 gezeigte Stellung gedreht werden, so dass die Stützeinrichtung 410 eine kleine(re) Querabmessung besitzt. Dadurch kann das Halteelement 121 in die Arretierposition bewegt werden, in welcher das Halteelement 121 außenseitig an der Stützeinrichtung 410 bzw. an den Enden der Teilabschnitte 412 anliegen kann. Das Halteelement 121 bzw. dessen innen liegende Öffnung ist derart dimensioniert, dass erst die Drehbewegung der Stützelemente 411 in die in Figur 9 gezeigte Stellung die Bewegung in die Arretierposition ermöglicht. Entsprechend der Form der Stützeinrichtung 410 kann die Öffnung des Halteelements 121 beispielsweise eine reckteckförmige oder quadratische Kontur besitzen.

In der Arretierposition kann das Halteelement 121 eine entsprechende Haltekraft bereitstellen, welche einer hiergegen gerichteten Drehbewegung der Stützelemente 411 entgegenwirkt. Die Stützeinrichtung 410 weist folglich eine relativ hohe Stabilität auf, so dass das Ventil 100 auf zuverlässige Weise geschlossen gehalten werden kann. Dadurch ist es möglich, die Bestromung der Erregerspule 139 auf einen minimalen Wert zu reduzieren. Sofern die minimale Bestromung wegfällt (oder unterschritten wird) und infolgedessen das Halteelement 121 von der Arretierposition entfernt wird, verliert die Stützeinrichtung 410 die hohe Festigkeit. Daher kann die Ventilstange 141 die Stützabschnitte 411 wieder auseinanderdrücken bzw. -drehen, wodurch die Ventilstange 141 unter axialer "Verkleinerung" der Stützeinrichtung 410 wieder in die erste Schaltposition zurückkehren kann.

Die an dem Polgehäuse 160 bzw. an dem Befestigungsabschnitt 165 abgestützte Stützeinrichtung 410 weist ebenfalls ein nichtlinear von der Auslenkung der Ventilstange 141 abhängiges Verhältnis zwischen einer außenseitig auf die Stützeinrichtung 410 bzw. auf die Teilabschnitte 412 einwirkenden Haltekraft und einer auf die Ventilstange 141 einwirkenden Stützkraft auf. In dem axial gestreckten Zustand von Figur 9 ist die mit dem Halteelement 121 bereitgestellte Haltekraft wesentlich kleiner als die Stützkraft. Das Lösen der Arretierung kann daher mit einem relativ geringen Kraftaufwand erfolgen.

Die anhand der Figuren beschriebenen Ausführungsformen stellen bevorzugte bzw. beispielhafte Ausführungsformen der Erfindung dar. Anstelle der beschriebenen Ausführungsformen sind weitere Ausführungsformen vorstellbar, welche weitere Abwandlungen von beschriebenen Merkmalen umfassen können. Insbesondere ist es denkbar, anders aufgebaute Stützeinrichtungen zu verwirklichen, bei denen ebenfalls ein nichtlineares Verhalten zwischen einer Haltekraft und einer Stützkraft vorliegen kann, und welches daher in gleicher Weise dazu verwendet werden kann, um in einem arretierten Zustand eine Haltekraft in eine wesentlich größere und auf eine Ventilstange einwirkende Stützkraft umzusetzen.

Ein anderer Aufbau ist auch für eine Arretiereinrichtung bzw. ein Halteelement einer solchen Arretiereinrichtung denkbar. Beispielsweise kann ein Halteelement vorgesehen sein, welches nur an einer Stelle oder in einem bestimmten Bereich einen Anlageabschnitt aufweist. In der Arretierposition eines solchen Halteelements kann der Anlageabschnitt an einer Stützeinrichtung anliegen, um einer Querausdehnung der Stützeinrichtung entgegen zu wirken und dadurch die Stützeinrichtung zu arretieren.

Des Weiteren sind die oben beschriebenen Ansätze nicht nur auf stromlos geöffnete Abschaltventile beschränkt, sondern können auch bei anders aufgebauten Magnetventiltypen zur Anwendung kommen. Ein mögliches Ausführungsbeispiel ist ein Umschaltventil. Ein solches Magnetventil kann ein erstes und ein zweites Schließelement aufweisen, welche an verschiedenen Positionen auf einer Ventilstange angeordnet sind. In einer ersten Schaltposition kann das erste Schließelement an einem zugehörigen ersten Ventilsitz anliegen und diesen verschließen, wohingegen ein zweiter Ventilsitz nicht verschlossen ist. Mit der Auslenkung der Ventilstange (erneut hervorgerufen durch Bestromen einer Erregerspule) in die zweite Schaltposition kann der zuvor verschlossene erste Ventilsitz geöffnet, und der zweite Ventilsitz durch das zweite Schließelement verschlossen werden, was eine Umschaltfunktion realisiert. Hierbei kann in gleicher Weise ein Haltelement in eine Arretierposition an eine zum Abstützen der Ventilstange vorgesehene Stützeinrichtung bewegt werden, wodurch die Stützeinrichtung arretiert, und dadurch die Bestromung reduziert werden kann.

## Patentansprüche

1. Magnetventil (100), aufweisend:

   eine Ventilstange (141);
   eine elektromagnetische Betätigungseinrichtung (131, 135, 139) zum Auslenken der Ventilstange (141) ausgehend von einer ersten Schaltposition in eine zweite Schaltposition;
   eine Stützeinrichtung (110, 210, 310, 410) zum Abstützen der Ventilstange (141), welche abhängig von der Auslenkung der Ventilstange (141) eine unterschiedliche Form aufweist; und
   eine Arretiereinrichtung (121, 122, 123, 125), welche ausgebildet ist, bei einem Aktivieren der elektromagnetischen Betätigungseinrichtung (131, 135, 139) zum Auslenken der Ventilstange (141) in die zweite Schaltposition ein bewegbares Halteelement (121) in eine Arretierposition zu bewegen, in welcher das Halteelement (121) an der Stützeinrichtung (110, 210, 310, 410) anliegt, und bei einem Deaktivieren der elektromagnetischen Betätigungseinrichtung (131, 135, 139) das Halteelement (121) von der Arretierposition zu entfernen.

2. Magnetventil nach Anspruch 1,
   wobei die Stützeinrichtung (110, 210, 310, 410) ausgebildet ist, eine auf die Stützeinrichtung (110, 210, 310, 410) einwirkende Haltekraft in eine auf die Ventilstange (141) einwirkende Stützkraft umzusetzen, wobei das Verhältnis aus Haltekraft und Stützkraft nichtlinear abhängig ist von der Auslenkung der Ventilstange (141), wobei die Arretiereinrichtung (121, 122, 123, 125) ausgebildet ist, die Haltekraft mit dem in die Arretierposition bewegten Halteelement (121) auf die Stützeinrichtung (110, 210, 310, 410) zu übertragen, und wobei die von dem Halteelement (121) auf die Stützeinrichtung (110, 210, 310, 410) übertragene Haltekraft kleiner ist als die auf die Ventilstange (141) einwirkende Stützkraft.

3. Magnetventil nach einem der vorhergehenden Ansprüche,
   wobei die elektromagnetische Betätigungseinrichtung einen mit der Ventilstange (141) verbundenen Magnetanker (135), ein Joch (131) und eine Erregerspule (139) aufweist, wobei zwischen dem Magnetanker (135) und dem Joch (131) eine Rückstellfeder (137) angeordnet ist,

und wobei der Magnetanker (135) und das Joch (131) über die Erregerspule (139) magnetisierbar sind, so dass eine Anziehung zwischen dem Magnetanker (135) und dem Joch (131) gegen die Rückstellkraft der Rückstellfeder (137) hervorrufbar ist.

4. Magnetventil nach Anspruch 3,
wobei die Arretiereinrichtung ein Federelement (122) zum Bewegen des Halteelements (121) in die Arretierposition, ein in Bezug auf die Ventilstange (141) bewegbares Ankerteil (125) und eine weitere Rückstellfeder (127) aufweist, wobei sich das bewegbare Ankerteil (125) an dem Halteelement (121) abstützt, wobei die weitere Rückstellfeder (127) zwischen dem bewegbaren Ankerteil (125) und dem Magnetanker (135) angeordnet ist,
und wobei das bewegbare Ankerteil (125) über die Erregerspule (139) magnetisierbar ist, so dass eine Anziehung zwischen dem bewegbaren Ankerteil (125) und dem Magnetanker (135) gegen die Rückstellkraft der weiteren Rückstellfeder (127) hervorrufbar und das Halteelement (121) über das Federelement (122) in die Arretierposition bewegbar ist.

5. Magnetventil nach einem der vorhergehenden Ansprüche,
wobei die Stützeinrichtung (110, 210) als Kniehebel-Mechanismus ausgebildet ist.

6. Magnetventil nach einem der vorhergehenden Ansprüche,
wobei die Stützeinrichtung eine Federhülse (110) umfasst, welche zwei Endabschnitte (111, 113) und die Endabschnitte (111, 113) verbindende Verbindungsstege (112) aufweist.

7. Magnetventil nach einem der vorhergehenden Ansprüche,
wobei die Stützeinrichtung (310) zwei über ein Scharnier (315) verbundene und gegeneinander bewegbare Stützelemente (311) umfasst, und wobei zwischen den Stützelementen (311) ein Federelement (319) angeordnet ist, um die Stützelemente (311) bei einem Auslenken der Ventilstange (141) in die zweite Schaltposition derart zu positionieren, dass das Halteelement (121) in die Arretierposition bewegbar ist.

8. Magnetventil nach einem der vorhergehenden Ansprüche,
wobei die Stützeinrichtung (410) zwei Stützelemente (411) aufweist, welche gegeneinander verschiebbar sind, wobei eines der Stützelemente (411) über ein Scharnier (416) mit der Ventilstange (141) verbunden ist, wobei das andere der Stützelemente (411) über ein Scharnier (416) mit einem an dem Magnetventil vorgesehenen Befestigungsabschnitt (165) verbunden ist, und wobei Federelemente (419) an den Stützelementen (411) angeordnet sind, um die Stützelemente (411) bei einem Auslenken der Ventilstange (141) in die zweite Schaltposition derart zu positionieren, dass das Halteelement (121) in die Arretierposition bewegbar ist.

9. Magnetventil nach einem der vorhergehenden Ansprüche,
wobei die Stützeinrichtung (110, 210, 310, 410) an einem Ende der Ventilstange (141) angeordnet ist,
und wobei die Ventilstange (141) an einem entgegen gesetzten Ende ein Schließelement (145) aufweist, welches bewegbar und mit Hilfe eines Federelements (147) federnd an der Ventilstange (141) angeordnet ist.

**Claims**

1. Solenoid valve (100), having:

   a valve rod (141);
   an electromagnetic actuating device (131, 135, 139) for deflecting the valve rod (141) starting from a first switching position into a second switching position;
   a supporting device (110, 210, 310, 410) for supporting the valve rod (141), which supporting device (110, 210, 310, 410) has a different shape in a manner which is dependent on the deflection of the valve rod (141); and
   a locking device (121, 122, 123, 125) which is configured to move a movable holding element (121) into a locking position in the case of an activation of the electromagnetic actuating device (131, 135, 139) for deflecting the valve rod (141) into the second switching position, in which the holding element (121) bears against the supporting device (110, 120, 310, 410), and to remove the holding element (121) from the locking position in the case of a deactivation of the electromagnetic actuating device (131, 135, 139).

2. Solenoid valve according to Claim 1,
the supporting device (110, 210, 310, 410) being configured to convert a holding force which acts on the supporting device (110, 210, 310, 410) into a supporting force which acts on the valve rod (141), the ratio of the holding force and the supporting force being dependent in a non-linear manner on the deflection of the valve rod (141), the locking device (121, 122, 123, 125) being configured to transmit the holding force to the supporting device (110, 210, 310, 410) by way of the holding element (121) which is moved into the locking position, and the holding force which is transmitted by the holding element (121) to the supporting device (110, 210, 310, 410) being smaller than the supporting force which acts on the valve rod (141).

3. Solenoid valve according to either of the preceding claims, the electromagnetic actuating device having a magnet armature (135) which is connected to the valve rod (141), a yoke (131) and an exciter coil (139), a restoring spring (137) being arranged between the magnet armature (135) and the yoke (131),

and it being possible for the magnet armature (135) and the yoke (131) to be magnetized via the exciter coil (139), with the result that an attraction can be brought about between the magnet armature (135) and the yoke (131) counter to the restoring force of the restoring spring (137).

4. Solenoid valve according to Claim 3, the locking device having a spring element (122) for moving the holding element (121) into the locking position, an armature part (125) which can be moved in relation to the valve rod (141), and a further restoring spring (127), the movable armature part (125) being supported on the holding element (121), the further restoring spring (127) being arranged between the movable armature part (125) and the magnet armature (135),

and it being possible for the movable armature part (125) to be magnetized via the exciter coil (139), with the result that an attraction can be brought about between the movable armature part (125) and the magnet armature (135) counter to the restoring force of the further restoring spring (127), and the holding element (121) can be moved into the locking position via the spring element (122) .

5. Solenoid valve according to one of the preceding claims, the supporting device (110, 210) being configured as a toggle lever mechanism.

6. Solenoid valve according to one of the preceding claims, the supporting device comprising a spring sleeve (110) which has two end sections (111, 113) and connecting webs (112) which connect the end sections (111, 113).

7. Solenoid valve according to one of the preceding claims, the supporting device (310) comprising two supporting elements (311) which are connected via a hinge (315) and can be moved with respect to one another, and a spring element (319) being arranged between the supporting elements (311), in order to position the supporting elements (311), in the case of a deflection of the valve rod (141) into the second switching position, in such a way that the holding element (121) can be moved into the locking position.

8. Solenoid valve according to one of the preceding claims, the supporting device (410) having two supporting elements (411) which can be displaced with respect to one another, one of the supporting elements (411) being connected via a hinge (416) to the valve rod (141), and the other one of the supporting elements (411) being connected via a hinge (416) to a fastening section (165) which is provided on the solenoid valve, and spring elements (419) being arranged on the supporting elements (411), in order to position the supporting elements (411), in the case of a deflection of the valve rod (141) into the second switching position, in such a way that the holding element (121) can be moved into the locking position.

9. Solenoid valve according to one of the preceding claims, the supporting device (110, 210, 310, 410) being arranged at one end of the valve rod (141), and the valve rod (141) having, at an opposite end, a closing element (145) which is arranged on the valve rod (141) such that it can be moved and is sprung with the aid of a spring element (147).

**Revendications**

1. Electrovanne (100), présentant:

- une tige de soupape (141);
- un dispositif d'actionnement électromagnétique (131, 135, 139) pour le déplacement de la tige de soupape (141) d'une première position de commutation à une seconde position de commutation;
- un dispositif de soutien (110, 210, 310, 410) pour soutenir la tige de soupape (141), qui présente une forme différente en fonction du déplacement de la tige de soupape (141); et
- un dispositif d'arrêt (121, 122, 123, 125), qui est configuré pour déplacer, lors d'une activation du dispositif d'actionnement électromagnétique (131, 135, 139) pour déplacer la tige de soupape (141) dans la seconde position de commutation, un élément de maintien mobile (121) dans une position d'arrêt, dans laquelle l'élément de maintien (121) s'applique sur l'élément de soutien (110, 210, 310, 410), et pour écarter l'élément de maintien (121) de la position d'arrêt lors d'une désactivation du dispositif d'actionnement électromagnétique (131, 135, 139).

2. Electrovanne selon la revendication 1, dans laquelle le dispositif de soutien (110, 210, 310, 410) est configuré pour convertir une force de maintien agissant sur le dispositif de soutien (110, 210, 310, 410) en une force de soutien agissant sur la tige de soupape (141), dans laquelle le rapport de la force de maintien à la force de soutien dépend de façon non linéaire du déplacement de la tige de soupape (141), dans laquelle le dispositif d'arrêt (121, 122, 123, 125) est configuré pour transmettre la force de maintien au dispositif de soutien (110, 210, 310, 410) avec l'élément de maintien (121) déplacé dans la position d'arrêt, et dans laquelle la force de maintien transmise de l'élément de maintien (121) au dispositif de soutien (110, 210, 310, 410) est inférieure à la force de soutien agissant sur la tige de soupape (141).

3. Electrovanne selon l'une quelconque des revendications précédentes, dans laquelle le dispositif d'actionnement électromagnétique présente un noyau magnétique (135) assemblé à la tige de soupape (141), une armature (131) et une bobine d'excitation (139), dans laquelle un ressort de rappel (137) est disposé entre le noyau magnétique (135) et l'armature (131), et dans laquelle le noyau magnétique (135) et l'armature (131) peuvent être magnétisés par la bobine d'excitation (139), de telle manière qu'une attraction entre le noyau magnétique (135) et l'armature (131) puisse être provoquée contre la force de rappel du ressort de rappel (137) .

4. Electrovanne selon la revendication 3, dans laquelle le dispositif d'arrêt présente un élément de ressort (122) pour déplacer l'élément de maintien (121) dans la position d'arrêt, une partie de noyau (125) déplaçable par rapport à la tige de soupape (141) et un autre ressort de rappel (127), dans laquelle la partie de noyau déplaçable (125) s'appuie sur l'élément de maintien (121), dans laquelle l'autre ressort de rappel (127) est disposé entre la partie de noyau mobile (125) et le noyau magnétique (135), et dans laquelle la partie de noyau déplaçable (125) peut être magnétisée par la bobine d'excitation (139), de telle manière qu'une attraction entre la partie de noyau déplaçable (125) et le noyau magnétique (135) puisse être provoquée contre la force de rappel de l'autre ressort de rappel (127) et que l'élément de maintien (121) puisse être déplacé dans la position d'arrêt par l'élément de ressort (122).

5. Electrovanne selon l'une quelconque des revendications précédentes, dans laquelle le dispositif de soutien (110, 210) est constitué par un mécanisme à levier articulé.

6. Electrovanne selon l'une quelconque des revendications précédentes, dans laquelle le dispositif de soutien comprend une douille élastique (110), qui présente deux parties d'extrémité (111, 113) et des nervures de liaison (112) reliant les parties d'extrémité (111, 113).

7. Electrovanne selon l'une quelconque des revendications précédentes, dans laquelle le dispositif de soutien (310) comprend deux éléments de soutien (311) reliés par une charnière (315) et déplaçables l'un par rapport à l'autre, et dans laquelle un élément de ressort (319) est disposé entre les éléments de soutien (311), afin de positionner les éléments de soutien (311) lors d'un déplacement de la tige de soupape (141) dans la seconde position de commutation, de telle manière que l'élément de maintien (121) puisse être déplacé dans la position d'arrêt.

8. Electrovanne selon l'une quelconque des revendications précédentes, dans laquelle le dispositif de soutien (410) présente deux éléments de soutien (411), qui peuvent coulisser l'un par rapport à l'autre, dans laquelle un des éléments de soutien (411) est relié par une charnière (416) à la tige de soupape (141), dans laquelle l'autre des éléments de soutien (411) est relié par une charnière (416) à une partie de fixation (165) prévue sur l'électrovanne, et dans laquelle des éléments de ressort (419) sont disposés sur les éléments de soutien (411), afin de positionner les éléments de soutien (411) lors d'un déplacement de la tige de soupape (141) dans la seconde position de commutation, de telle manière que l'élément de maintien (121) puisse être déplacé dans la position d'arrêt.

9. Electrovanne selon l'une quelconque des revendications précédentes, dans laquelle le dispositif de soutien (110, 210, 310, 410) est disposé à une extrémité de la tige de soupape (141), et dans laquelle la tige de soupape (141) présente à une extrémité opposée un élément de fermeture (145), qui peut être déplacé et qui est disposé élastiquement sur la tige de soupape (141) à l'aide d'un élément de ressort (147).

**Fig. 1**

100

110 111 112 121

122

113

129

123

125

127

139

135

141

160

137

131

170

185

175

187

180

147

155

182

145

181

Fig. 2

**Fig. 3**

**Fig. 4**

**Fig. 5**

**Fig. 6**

161   319

310

312                312

315

121

311                311

313        313

141

**Fig. 7**

161   312   312

121

315

310

311        311

313                313

141

**Fig. 8**

410

165

419 — 416

413

121   411   412

411   412

416   413

419

141

**Fig. 9**

121   416   165   419

410

411   413

411   412

412

413

419

416   141

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19754257 A1
- EP 0653990 B1
- DE 19753575 A1